# EUROPÄISCHE PATENTANMELDUNG

(11) **EP 2 478 958 A1**
(43) Veröffentlichungstag der Anmeldung: **25.07.2012**
(21) Anmeldenummer: 11151421.2
(22) Anmeldetag: 19.01.2011
(51) Int. Cl.: B01J 23/04, B01J 23/887, C10G 45/08, C10M 175/00

(54) **Katalytisch aktives Material für die Hydrierungsbehandlung von Kohlenwasserstoffen**

(71) Anmelder: Euro Support Catalyst Group B.V., 3811 KH Amersfoort (NL)
(72) Erfinder: Bonné, Raimond L.C., 3823, VP Amersfoort (NL); Gonsiorová, Olga, 336 06, Litvínov (CZ); John, Hans-Heino, D-06120, Halle (S) (DE)
(74) Vertreter: Nobbe, Matthias

(57) **Zusammenfassung**

Die Erfindung bezieht sich auf ein neuartiges katalytisch aktives Material mit Absorbenseigenschaften für die hydrierende Behandlung von stark mit anorganischen Bestandteilen verunreinigten Kohlenwasserstoffen, und dem Verfahren zu dessen Herstellung

## Beschreibung

Die Erfindung bezieht sich auf ein neuartiges katalytisch aktives Material mit Absorbenseigenschaften für die Hydrierungsbehandlung von stark mit anorganischen Bestandteilen verunreinigten Kohlenwasserstoffen, und Verfahren zu dessen Herstellung. Das erfindungsgemäße Material ermöglicht, aus beliebigen kohlenwasserstoffhaltigen Abfallströmen, Erdöl, Kohlenwasserstoffströmen natürlichen oder künstlichen Ursprungs, die insbesondere stark mit anorganischen Inhaltstoffen und Heteroatomverbindungen verunreinigt sind, durch Aufnahme von Schmutzpartikeln, kolloid dispersen Substanzen und Katalysatorgiften den Hauptkatalysator zur Hydrierung der Kohlenwasserstoffströme zu schützen.

### Technisches Gebiet

Die Inhaltstoffe solcher stark mit anorganischen Bestandteilen verunreinigten Kohlenwasserstofffraktionen sind für die Katalysatoren, die bei der hydrierenden Verarbeitung der Kohlenwasserstoffe eingesetzt werden, nachteilig. Sie lagern sich im Katalysatorbett ab und vermindern dadurch den Durchgang durch den Reaktor. Das kann zur vorzeitigen Abstellung der Anlage und der Notwendigkeit zum Katalysatorwechsel führen. Einige schädliche Inhaltstoffe der Kohlenwasserstoffe liegen als; im Kohlenwasserstoffstrom gelöste chemische Verbindungen vor und können nicht aus diesem Kohlenwasserstoffstrom herausgefiltert werden.

Zu diesen gelösten Verbindungen gehören Verbindungen des Phosphors, Arsens und metallorganische Verbindungen, z. B. des Nickels und Vanadiums. Sie gelangen mit dem Kohlenwasserstoffstrom zu einem schwefelfesten Hydrierkatalysator, der meistens aus Verbindungen von Elementen der VI. und/oder der VIII. Nebengruppe des Periodensystems der Elemente, kombiniert mit einem porösen Träger, besteht, und beeinträchtigen dessen Hydrierfunktion. Das führt ebenfalls zur vorzeitigen Vergiftung des Hydrierkatalysators, zur Abstellung der Anlage und zum Katalysatorwechsel.

Insbesondere im Prozess der hydrierenden Bearbeitung von verbrauchten Motorenölen treten solche nachteiligen Erscheinungen auf. Diese Motoröle enthalten relativ große Mengen an Zink-, Phosphor- und Kalziumverbindungen, die als Additive zur Verbesserung der Schmiereigenschaften und der Oxydationsstabilität den Motorölen hinzugefügt wurden. Durch den langen Gebrauch der Öle sind diese auch mit geringen Mengen an Eisen-, Chrom, Kupfer- u. a. Metallverbindungen verunreinigt, die ebenfalls auf den Hydrierkatalysator gelangen können und diesen schädigen. Ein besonders starkes Katalysatorgift stellt Arsen dar, das schon in geringen Mengen die Hydrierwirkung von schwefelfesten Katalysatoren herabsetzt.

### Stand der Technik

Im Stand der Technik ist eine Reihe von Katalysatoren bekannt, die in den Verfahren zur Gewinnung von Kohlenwasserstoffen aus verunreinigten Kohlenwasserstoffen angewendet werden.

So ist aus der DE102008022098 ein Hydrodemetallisierungskatalysator bekannt, der die Demetallisierung gestattet und unter anderem Dehalogenierung, Entschwefelung, Denitrifikation, Olefinsättigung, Abscheidung organischen Phosphors, organischer Siliziumverbindungen und die Umwandlung der Sauerstoffverbindungen aus dem Kohlenwasserstoffstrom umfasst.

Die bevorzugte Zusammensetzung des in den oben beschriebenen Verfahren eingesetzten Hydrodemetallisierungskatalysators ist ein anorganisches Oxidmaterial. Poröse oder nichtporöse Katalysatoren können unter anderem sein: Siliziumdioxid, Tonerde, Titandioxid, Zirkondioxid, Kohlenstoff, Siliziumcarbid, Siliziumdioxid-Tonerde, Diatomeenerde, Ton, Magnesiumoxid, Aktivkohlenstoffstoff und Molekularsiebe. Siliziumdioxid-Tonerde ist ein Material, das amorph oder kristallin sein kann und aus Siliziumdioxid-Struktureinheiten besteht, die jedoch nicht nur ein physikalisches Gemisch aus Siliziumdioxid und Tonerde darstellen. Ein Gemisch aus verschiedenen HydrodemetallisierungsKatalysatoren kann in Abhängigkeit von der Materialquelle für den Kohlenwasserstoff-Einsatzstrom verwendet werden. Eine komplexe Kohlenwasserstoff-Einsatzstrom-Mischung kann ein Gemisch von Katalysatoren aufgrund der Art der abzuscheidenden Metalle und Feststoffe erfordern. In einem anderen Ausführungsbeispiel umfasst der Katalysator ein auf dem anorganischen Oxidmaterial abgeschiedenes Metall. Geeignete auf dem Träger für Hydrodemetallisierungsaktivität abgeschiedene Metalle (in Form von chemischen Verbindungen dieser Metalle) sind unter anderem solche der Gruppen VIB und VIII des Periodensystems der Elemente zum Beispiel ein Metall der Gruppe aus Chrom (Cr), Molybdän (Mo), Wolfram (W), Eisen (Fe), Ruthenium (Ru), Osmium (Os), Kobalt (Co), Rhodium (Rh), Iridium (Ir), Nickel (Ni), Palladium (Pd) und Platin (Pt). Die Menge der aktiven metallischen Komponente ist abhängig von dem jeweiligen Metall und den physikalischen und chemischen Eigenschaften des jeweiligen Kohlenwasserstoff-Einsatzmaterials. Die aus der Gruppe VIB ausgewählten metallischen Komponenten liegen im Allgemeinen in einer Menge von ein bis 20 Gewichtsprozent des Katalysators vor, die metallischen Komponenten der Eisengruppe der Gruppe VIII liegen im Allgemeinen in einer Menge von 0,2 bis zehn Gewichtsprozent des Katalysators vor, und die Edelmetalle der Gruppe VIII liegen im Allgemeinen in einer Menge von 0,1 bis fünf Gewichtsprozent des Katalysators vor. Es ist weiterhin vorgesehen, dass der Hydrodemetallisierungskatalysator wenigstens eine der folgenden Komponenten umfassen kann: Caesium, Francium, Lithium, Kalium, Rubidium, Natrium, Kupfer, Gold, Silber, Kadmium, Quecksilber und Zink.

Die dem Durchschnittsfachmann bekannten Hydrodemetallisierungskatalysatoren erlauben jedoch nur undiskutable Laufzeiten der technischen Anlage, wenn die nichtorganischen Inhaltstoffe der verunreinigten Kohlenwasserstoffe, wie zum Beispiel Sedimente und Verbindungen des Phosphors, so erheblich hoch sind, dass sie zur schnellen Bettverstopfung und Deaktivierung des Hydrodemetallisierungskatalysators im ersten Reaktor und zur Vergiftung des Hydrobehandlungskatalysators im zweiten Reaktor führen. Die anorganischen Inhaltstoffe lösen schwere Behinderungen des Anlagenbetriebs aus. Solche schwerwiegenden Nachteile sind:
- Verstopfung des Katalysatorbetts mit anorganischen Sedimenten, die zu einem hohen Differenzdruck und zum vorzeitigem Abstellen der Anlage und zum Wechsel der Reaktorbefüllungen führt,
- Vergiftung der Hydrierkatalysatoren durch die anorganischen Inhaltstoffe, wie P, As, Pb und weitere Metalle
- Austreten von anorganischen Produkten, wenn sie die Katalysatorschichten durchlaufen und Übergang in das Abwasser, das dadurch mit erhöhten Konzentrationen schädlicher Substanzen kontaminiert wird und nicht auf normalem Wege entsorgt werden kann, und
- Minderung der Produktqualitäten durch Nachlassen der Katalysatoraktivität.

Gemäß EP 0435310 A1 werden zum Abfangen von anorganischen Verunreinigungen aus schwefelhaltigen Kohlenwasserstoffströmen als Demetallisierungskatalysatoren auch Katalysatorformkörper auf Basis von Aluminiumoxid oder Alumosilikat als Träger verwendet, die Nickel und/oder Kobalt in Kombination mit Molybdän- oder Wolframverbindungen enthalten, die in der Reaktionsatmosphäre in Form von Ni₃S₂ bzw. Co₉S₈ und MoS₂ bzw. WS₂ vorliegen. Zur Erhöhung der Aufnahme von Schmutz bzw. anorganischen feinen Partikeln wird das Lückenvolumen zwischen den Formkörpern durch Profilierung der Katalysatorformlinge vergrößert, zum Beispiel durch Anwendung eines Ringprofils oder eines dreiarmigen Profils, das um die Längsachse verdreht ist. Zum Abfangen des Katalysatorgifts Arsen aus arsenorganischen Verbindungen werden Zusammensetzungen mit einem hohen Nickelgehalt verwendet, um Arsen als NiAs zu binden.

Ähnliche Zusammensetzungen, spezifische Oberflächen und Porengrößen werden für die Entfernung von Kontaminanten zum Beispiel in der WO/2004/101713 A1 und US 6759364 genannt. Diese, von den üblichen schwefelfesten Hydroraffinationskatalysatoren abgeleiteten Hydrierkatalysatoren besitzen spezifische Oberflächen von über 10 m2/g, meistens zwischen 150 und 300 m2/g, sind engporig und nicht in der Lage, große Mengen an anorganischem Material in ihrem Innern einzusammeln, und sie nehmen wenig Phosphor aus flüchtigen Phosphorverbindungen auf. Beim Einsatz solcher Katalysatoren zur hydrierenden Verarbeitung von Kohlenwasserstoffen, die hohe Mengen an organischen Phosphorverbindungen und organisch gebundenen Metallen enthalten, werden die organischen Phosphor- und Metallverbindungen nicht ausreichend lange vor dem eigentlichen Hydrierkatalysator zurückgehalten. Der Hydrierkatalysator wird schnell vergiftet, deaktiviert und erzielt keine ausreichend langen Laufzeiten. Der Wechsel der teuren Katalysatorfüllungen ist schon nach relativ kurzer Zeit fällig.

Gemäß DE 102007011471 OS ist eine Katalysatorkombination zur hydrierenden Verarbeitung verunreinigter Kohlenwasserstoffströme bekannt, bei der in der ersten Reaktionszone ein Katalysator zur Hydrodemetallisierung eingesetzt wird, der eine bimodale Porenverteilung aufweist. Er enthält Poren mit einem Durchmesser von 3 bis 10 nm mit einem Porenvolumen von 0,25 bis 0,35 cm³/g und zusätzlich Poren mit einem Durchmesser von 1000 bis 10000 nm = 1,0 bis 10 µm = 0,001 bis 0,01 mm mit einem Porenvolumen von 0,25 bis 0,35 cm³/g. Auch dieser Katalysator kann nicht die erheblich hohen Mengen an Metallen und Phosphor aufnehmen, da die zur Aufnahme der anorganischen Verbindungen zur Verfügung stehenden Porendurchmesser und das Porenvolumen nicht groß genug sind, die Poren an ihren Porenmündern schnell verstopft werden und einige Reaktanden aus den hydrierten Kohlenwasserstoffströmen, wie Phosphorverbindungen nicht in ausreichender Menge mit der chemischen Zusammensetzung der Katalysatormasse reagieren können.

EP 0260826 A1 beschreibt Katalysatoren oder Vorläufer dafür aus einem Keramikkörper mit Schaumstruktur. Die Katalysatoren sind für verschiedene Zwecke geeignet und enthalten unter anderem Aluminiumoxid und ein Alkalioxid. Zusätzlich kann das Material noch Hydriermetallverbindungen enthalten. Die beschriebenen Katalysatoren sind aber nicht für die Aufnahme von Schmutz und Katalysatorgiften geeignet und nicht dafür vorgesehen.

Bekannt sind nach DE 10134524 OS Katalysatorträger auf Aluminiumoxid-/Silikatbasis, die im Makro- und Mikrobereich eine gerichtete, durchgängige Porenstruktur aufweisen. Dieses Verfahren besteht im Wesentlichen darin, dass schlickerförmige Massen auf Aluminiumoxid-/Silikatbasis unter Verwendung von üblichen Modifizierungsmitteln, Bindemitteln und Thixotropiermitteln bei Temperaturen unter 100°C und pH-Werten von 7 bis 12 mit Metallpasten oderpulvern aufgeschäumt werden. Das aufgeschäumte keramische Material wird anschließend getrocknet und bei Temperaturen von 900 bis 1800 °C gebrannt. Dieser Katalysatorträger hat jedoch keine Wirksamkeit für die Umwandlung von organischen Heteroatomverbindungen und die Fixierung der entstehenden Verbindungen, so dass die Katalysatorgifte weiterhin in das Bett des Hydrierkatalysators gelangen.

Nach EP 10001837 A1 ist zur Aufnahme von festen partikelförmigen Fremdkörpern aus kontaminierten Kohlenwasserstoffströmen in einer Hydroraffinieranlage die Anwendung einer Schicht supermakroporösen Keramikmaterials, unter anderem auf Basis von Siliziumdioxid-Aluminiumoxid, bekannt. Dieses Keramikmaterial kann auch eine Beschichtung aus porösem Aluminiumoxid und einem Metall aus der Gruppe VIB oder VIII enthalten.

Diese Materialien sind vorrangig dazu geeignet, in großen Poren feste, anorganische Verbindungen aufzusammeln, zum Beispiel anorganische Si-haltige Sedimente, Partikel aus Zinkphosphat oder Zinkphosphid, nicht dagegen dazu, größere Mengen Phosphor aus flüchtigen phosphororganischen Verbindungen oder Phosphorwasserstoffverbindungen und gelöste metallorganische Verbindungen umzuwandeln und dann aufzunehmen. Die letzteren gehen durch das Wächterbett aus poröser Keramik und erniedrigen weiterhin die Wirksamkeit der danach angeordneten Hydrierkatalysatoren. Die Anordnung einer solchen Schutzschicht verlängert zwar die Laufzeit einer Katalysatorfüllung, ist aber technisch noch nicht zufriedenstellend.

EP 0412862 A1 beschreibt ein auf Nickel basierendes Absorbens zur Entfernung von Phosphor und Arsen aus flüssigen Kohlenwasserstofffraktionen. Diese Erfindung betrifft eine Masse zur Aufnahme von Phosphor, die aus 40 bis 97 Gew.-% eines porösen Trägers besteht, der wiederum 40 bis 98,5 Gew.-% Aluminiumoxid und 1,5 bis 60 % Oxide von Mg, Ca, Sr, Ba, Mn, Fe, Co, Ni, Cu und Zn im Aluminiumoxid gelöst enthält, sowie, bezogen auf die Gesamtzusammensetzung, 3 bis 40 Gew.-% Nickeloxid, welches durch Austausch oder durch Abscheidung auf dem Träger gebracht und nicht in Aluminat umgewandelt wird. Die Massen werden im Allgemeinen bei 600°C bzw. zwischen 750 und 800°C thermisch aktiviert. Danach werden sie zur Behandlung von vorzugsweise flüssigen Kohlenwasserstofffraktionen bei Temperaturen zwischen 110 und 280°C und 1 bis 100 bar in Wasserstoffatmosphäre eingesetzt. Die nach dieser EP 0412862 hergestellten Absorptionsmassen sind in der Lage, aus einem Kohlenwasserstoffstrom, der zum Beispiel 500 ppb Phosphor in Form von Trimethylphosphin und 500 ppm Schwefel in Form von schwefelorganischen Verbindungen enthält, den Phosphorgehalt bis auf < 100 ppb über 500 Stunden lang abzusenken. In Gegenwart höherer Schwefelmengen und bei längeren Laufzeiten verliert dieser Katalysator jedoch seine Aktivität und kann nur noch wenig Phosphor aufnehmen, da das Nickel zu Nickelsulfid und/oder Nickelarsenid umgewandelt wird und dann für die hydrierende Umwandlung der phosphororganischen Verbindungen keine stabile schwefelfeste Hydrierkomponente mehr darstellt.

### Aufgabe der Erfindung

Daher besteht hoher Bedarf an einem Material, das gegenüber den aus dem Stand der Technik bekannten Materialen verbesserte Eigenschaften hinsichtlich der Bindung bzw. Aufnahme von Schmutzpartikeln und hinsichtlich der Vorhydrierbehandlung phosphor-, arsen- und metallorganischer Verbindungen aufweist. Die Aufgabe der Erfindung besteht somit darin, ein neues Material für die hydrierende Behandlung von stark mit anorganischen Bestandteilen verunreinigten Kohlenwasserstoffen bereitzustellen, das den eigentlichen Hydrierkatalysator vor der Abnahme seiner Aktivität schützt.

Seitens der Erfinder wurde überraschenderweise gefunden, dass die Aufgabe der Erfindung durch Bereitstellung eines neuen katalytisch aktiven und als Adsorbens wirkenden keramischen Materiales, das sowohl feine Schmutzpartikel aufnehmen als auch gelöste Heterokohlenwasserstoffverbindungen als auch metallorganische Verbindungen chemisch-hydrierend umwandeln und die Elemente aus den entstehenden, für den Hydrierkatalysator schädlichen Substanzen fixieren kann, so dass der Haupthydrierkatalysator dauerhaft geschützt wird, gelöst werden kann.

### Beschreibung der Erfindung

Die Erfindung schlägt ein neuartiges katalytisch aktives und als Adsorbens wirkendes keramisches Material vor, das dadurch erhältlich ist, dass man keramische Partikel, vorzugsweise alumosilikatische Partikel, mit durchgehenden Poren von 0,01 bis 3,0 mm Durchmesser in ein oder mehreren Verfahrensschritten mit ein oder mehreren Verbindungen von Elementen der I. Hauptgruppe, und gegebenenfalls weiterhin mit ein oder mehreren Verbindungen von Elementen der Vl. Nebengruppe und/oder der Vlll. Gruppe des Periodensystems belädt und/oder in diese keramischen Partikel einarbeitet und die so behandelten Partikel thermisch bei Temperaturen von 300 bis 800 °C nachbehandelt, wobei das erfindungsgemäße, vorzugsweise hydrierkomponentenhaltige, supermakroporöse Alkalialumosilikat gebildet wird.

Die Beladung mit und/oder Einarbeitung von Verbindungen von Elementen der I. Hauptgruppe, der Vl. Nebengruppe und/oder der Vlll. Gruppe des Periodensystems auf die keramischen Partikel kann in einer oder mehreren Stufen mit zwischengeschalteten thermischen Behandlungen erfolgen.

Vorzugsweise werden die keramischen Partikel mit einer Lösung einer Alkalimetallverbindung imprägniert und dann thermisch bei Temperaturen von 300 bis 800 °C nachbehandelt, und, falls gewünscht, kann das erhaltene Alkalialumosilikat mit Verbindungen von Elementen der Vl. Nebengruppe und/oder der Vlll. Nebengruppe des Periodensystems der Elemente imprägniert und erneut thermisch bei 350 bis 600 °C nachbehandelt.

Das Alkalialumosilikat kann erfindungsgemäß in Partikeln von 2 bis 50 mm Größe in Form von Würfeln, Quadern, Scheiben, Stäbchen mit runden oder profilierten Durchmessern, Hohlkörpern, Kugeln oder eiförmigen oder unregelmäßig geformten Körpern vor, deren Form und Größe nach gewünschter Anwendung gewählt werden kann.

Das erfindungsgemäße, so imprägnierte Alkalialumosilikat weist ein Porenvolumen von 0,6 bis 1,5 cm³/g, bevorzugt 0,8 bis 1,2 cm³/g auf, wobei die Poren einen Durchmesser von 0,01 bis 3,0 mm, bevor 0,05 bis 2,0 mm besitzen. Die spezifische Oberfläche des Alkalialuminosilikats liegt unter 10 m²/g, bevorzugt unter 6 m²/g und besonders bevorzugt unter 2 m²/g.

Das vorgelegte Alkalialumosilikat kann beispielsweise dadurch hergestellt werden, dass man einen Schlicker aus Aluminiumoxiden und Silikaten durch Vermischen der pulverförmigen Komponenten mit Wasser und Hilfsmitteln zur Stabilisierung erzeugt und Luft unter Ausbildung von feinen blasenförmigen Hohlräumen eingerührt wird, man die Masse in Formen gießt und langsam trocknet, um das Wasser zu entfernen, wobei das durchgehende Porensystem von großen Poren gebildet wird, und man die getrockneten Formlinge bei Temperaturen zwischen 900 und 1800 °C unter Bildung von Mullit kalziniert. Die Herstellung solcher als Schaumkeramik bekannter ähnlicher Materialien ist den Fachleuten generell bekannt.

Das so hergestellte supermakroporöse Alumosilikat kann nach der Herstellung als Alumosilikat, vorzugsweise mit Mullitstruktur, anschließend mit der Alikalimetallverbindung imprägniert und thermisch nachbehandelt werden. Man kann aber auch eine Alkaliverbindung in den Schlicker einbringen, so dass die angestrebte Konzentration der Alkaliverbindungen im zuvor angegebenen Bereich schon erreicht wird. Vorteilhaft wird das supermakroporöse Alumosilikat mittels des Verfahrens zur Imprägnierung mit einer bevorzugt wässrigen Lösung eines oder mehrerer Alkalimetallsalze behandelt, die bei der anschließenden thermischen Behandlung zerfallen und das jeweilige entsprechende Alkalimetalloxid ergeben, das mit dem keramischen Alumosilikat zu Alkalialumosilikat reagiert. Diese Behandlung kann in einer oder mehreren Stufen erfolgen und so als gleichzeitige Behandlung mit mehreren Alkalimetallsalzen in einer Stufe oder als Behandlung mit jeweils einem Alkalimetallsalz in mehreren Stufen ausgebildet sein. Die Menge an Alkalimetallsalzlösung ist so konzentiert und bemessen, dass der angestrebte Gehalt an Alkalimetall im Alkalialumosilikat erreicht wird. Hierzu sollte die Menge der Lösung von dem keramischen Alumosilikat vollständig aufgenommen werden können.

Im erfindungsgemäß hergestellten Alkalialumosilikat kann das Verhältnis von SiO₂ zu Al₂O₃ 5 : 95 bis 20:80 ausgedrückt in Gew.-%, betragen. Als Alkalibestandteile des Alumosilikats eignen sich Verbindungen von Elementen der 1. Hauptgruppe des Periodensystems der Elemente, wie Li₂O, Na₂O, K₂O, Rb₂O und/oder Cs₂O. Als Alkalimetallverbindungen zur Behandlung bzw. Einarbeitung werden Verbindungen ausgewählt, die nach der Kalzination Li₂O, Na₂O, K₂O, Rb₂O und/oder Cs₂O, ergeben und mit dem keramischen Alumosilikat zu Alkalialumosilikat reagieren. Als Alkaliverbindungen eignen sich besonders die Nitrate, Hydroxide, Karbonate, Silikate und Salze organischer Säuren. Je nach Einsatzzweck enthält das erfindungsgemäß hergestellte Alkalialumosilikat in einer Ausführungsform 0,5 bis 30 Gew.-%" in einer weiteren Ausführungsform 1 bis 20 Gew.-% und in einer anderen Ausführungsform 5 bis 20 Gew.-%. Alkalioxid, insbesondere Na₂O und/oder K₂O, bezogen auf das getrocknete und kalzinierte Alkalialumosilikat.

Das erfindungsgemäß hergestellte Alkalialumosilikat kann mit Hydriermetallverbindungen beladen werden, vorzugsweise mit Elementen der VI. Nebengruppe wie Chrom, Molybdän, Wolfram und/oder Vlll. Gruppe des Periodensystems der Elemente (PSE) wie Eisen, Cobalt, Nickel, Ruthenium, Rhodium, Palladium, Osmium, Iridium und Platin sowie Kupfer und Zink als auch Kombinationen davon, wobei der Gehalt an Hydriermetallen bis etwa 20 Gew.-%, vorteilhafterweise bis 10 Gew.-%, bezogen auf das getrocknete und kalzinierte Alkalialumosilikat, betragen kann. Vorteilhafterweise werden schwefelfeste Kombinationen der Hydriermetalle Molybdän; Wolfram, Eisen, Kobalt und Nickel oder Kombinationen davon eingesetzt. Besonders vorteilhaft ist die Kombination von Ni-Mo. Zur Einbringung dieser Hydriermetalle, z. B. durch Imprägnierung der festen Trägerteilchen mit Lösungen von Salzen der Hydriermetalle, können den Fachleuten gut bekannte Verfahren angewendet werden. Es ist auch möglich das Alkalimetall oder Mischungen davon in Form von Verbindungen gleichzeitig mit den Hydriermetallen durch Imprägnieren einzubringen.

Beispielsweise kann eine wässrige Lösung von Ammoniak mit der Menge an Ammoniumdimolybdat und Nickelcarbonat sowie, wenn erforderlich, einer thermisch zersetzbaren Alkaliverbindung wie Natriumcarbonat in den gewünschten Mengenverhältnissen versetzt und auf das notwendige Volumen, das dem Gesamt-Porenvolumen des zu behandelnden Alumosilikats oder Alkalialumosilikats entspricht, eingestellt werden. Es ist ebenso möglich, das Alumosilikat oder Alkalialumosilikat mit Einzellösungen der einzelnen, katalytisch aktiven Metallsalze zu versetzen, wenn die Summe der Einzellösungen dem Gesamt-Porenvolumen des Materials entspricht und die Lösungen vollständig von dem Material aufgenommen werden. Je nach gewünschtem Gewichtsverhältnis der Metalle zueinander können die Lösungen in entsprechenden Konzentrationen und Mengen eingesetzt werden. Nach Trocknen des so behandelten Materials kann dann im nächsten Schritt die Kalzinierung durchgeführt werden.

Die Beladung mit Hydriermetallen und mit Alkalien kann vorteilhafterweise auch in einem Imprägnierschritt und nachfolgender Kalzinierung bei Temperaturen bis 600°C erfolgen.

Die Art der Beladung der festen, teilchenförmigen Kombination aus Katalysator und Absorptionsmittel mit Verbindungen von Elementen der I. Hauptgruppe sowie der Vl. Nebengruppe und/oder VIII. Gruppe des PSE in Zusammensetzung und Konzentrationen kann in Abhängigkeit von den anorganischen Inhaltstoffen des eingesetzten, verunreinigten Kohlenwasserstofföls nach den Kenntnissen der Durchschnittsfachleute variiert werden. Erfindungsgemäß wird somit eine Schicht aus Alkalialumosilikats auf der Oberfläche des Alumosilikats erzeugt, die sich zumindest teilweise über die Oberfläche des porösen Alumosilikats einschließlich der Poren und Kanäle im Inneren erstreckt und die nach Auffassung der Erfinder in erster Linie für die überraschen Eigenschaften des erfindungsgemäßen supermakroporösen Alkalialumosilikates verantwortlich zu sein scheint.

Das erfindungsgemäß eingesetzte Alkalilalumosilikat wird, wenn es die Hydriermetalle der VI. und/oder VIII. Nebengruppe des PSE enthält, vor dem Einsatz nach bekannten Methoden sulfidiert, z. B. durch Behandlung mit einem Gemisch aus Wasserstoff und Schwefelwasserstoff oder durch Imprägnierung mit schwefelorganischen Verbindungen. Es kann aber auch in situ sulfidiert werden, indem Schwefelverbindungen in Wasserstoffatmosphäre angeboten werden. Es kann aber auch sofort eingesetzt und bei hohem H₂S-Partialdruck werden die Verbindungen von Metallen der Vl: und/oder Vlll-Nebengruppe des PSE in Sulfide umgewandelt. Danach liegen die Metalle in Form ihrer Sulfide vor, die in den entsprechenden Kombinationen schwefelfeste Hydrierkatalysatoren darstellen. Die Reaktionsbedingungen im anzuwendenden, verbesserten Verfahren sind üblich und den Fachleuten bekannt:
- Gesamtdruck:: 5 bis 200 bar
- H2-Gehalt des KLG:: 50 bis 90 Vol.-%
- Durchsatz:: 3 bis 8 m³ pro kg Katalysator in der 3. Zone
- Temperaturen:: 300 bis 560 °C, vorzugsweise 300 bis 360 °C

Die Poren der üblichen Demetallisierungskatalysatoren haben in der Regel Durchmesser von unter 0,1 µm und sind so nicht in der Lage, Feststoffpartikel und große Mengen an Metallverbindungen aus dem Kohlenwasserstoffströmen aufzusammeln und zu fixieren. Das wird erst durch die Anwendung der erfindungsgemäßen Alkalialumosilkate gewährleistet.

Ein besonderer Vorteil der erfindungsgemäßen Alkalialuminat-Schaumkeramik besteht darin, dass sie große Poren und ein hohes Porenvolumen aufweist, wodurch die Transportreaktionen ins Innere der Teilchen nicht beeinträchtigt sind. So können auch große Moleküle und agglomerierte, feine anorganische Stäube bis ins Innere der einzelnen Teilchen gespült und aus dem Kohlenwasserstrom heraus filtriert werden. Im Gegensatz zu den üblichen Demetallisierungskatalysatoren bestehen daher keine Restriktionen durch die Anwendung größerer Teilchen der Alkalialuminat-Schaumkeramik mit Abmessungen bis zu mehreren Zentimeter. Das sich in der Schüttung ergebende Lückenvolumen kann darüber hinaus nach Sättigung der Poren mit Schmutzpartikeln weiter für den Transport des Öls und des Wasserstoffs im Reaktor genutzt werden und wird zum Ende der Betriebsperiode mit weiteren Schmutzpartikeln aufgefüllt. Somit wird auch die frühzeitige Entwicklung von nachteiligen Druckdifferenzen in der Anlage vermieden.

In dieser Form eignet sich das erfindungsgemäße Alumosilikat als katalytisch aktives Material, das vor dem eigentlichen Hydrierkatalysator im Katalysatorbett eingesetzt werden kann und im Kohlenwasserstoffstrom adsorbierend wirkt. So schützt es den eigentlichen Hydrierkatalysator vor den Verunreinigungen und Katalysatorgiften, und ist somit in der Lage, aus beliebigen kohlenwasserstoffhaltigen Abfallströmen, Erdöl, Kohlenwasserstoffströmen natürlichen oder künstlichen Ursprungs, die insbesondere stark mit anorganischen Inhaltstoffen und Heteroatomverbindungen verunreinigt sind, durch Aufnahme von Schmutzpartikeln, kolloid dispersen Substanzen und Katalysatorgiften den Hauptkatalysator zur Hydrierung der Kohlenwasserstoffströme zu schützen.

Als kohlenwasserstoffhaltiges Substrat können beliebige kohlenwasserstoffhaltige Abfallströme eingesetzt werden. Das erfindungsgemäße Material kann vorteilhafterweise zur hydrierenden Reinigung von verbrauchten Motorenölen eingesetzt werden.

Das verbrauchte Motorenöl enthält in der Regel 1 bis 3 Gew.-% Zinkdialkyldithiophosphat sowie weitere Additive wie beispielsweise Kalziumsulfonat. Während des Einsatzes im Motor nimmt das Motorenöl weitere Metallverbindungen des Bleis, Eisens, Chroms, Kupfers auf.

Im Hydrierverfahren gelangt das im Motoröl enthaltene Additiv Zinkdialkyldithiophosphat bzw. dessen phosphorhaltige Zersetzungsprodukte wenigstens teilweise. mit den verdampfbaren Kohlenwasserstoffen in die Reaktoreinheiten (Ablagerungs- und Reaktionszonen) und wird in der ersten Zone als anorganische Verbindung sofort abgeschieden. In der zweiten Reaktionszone werden die flüchtigen phosphororganischen Zersetzungsprodukte des Zinkdialkyldithiophosphats, hydrierend umgewandelt und Verbindungen, wie Phosphorsäure und Phosphorwasserstoff, werden an der Kombination aus Katalysator und Absorptionsmittel, bestehend aus makroporösem Alkalialumosilikat, chemisch gebunden.

Des Weiteren enthält das Öl metallorganische Verbindungen, zum Beispiel des Zinks, Eisens, Chroms, Kupfers und Arsens. Einige davon stellen Gifte für die Hydrierkatalysatoren dar. Diese werden ebenfalls an der Kombination aus Katalysator und Absorptionsmittel, bestehend aus makroporösem Alkalialumosilikat, zersetzt und werden teilweise in die chemische Struktur des Alkalialumosilikats eingebaut oder lagern sich als nach ihrer hydrierenden Zersetzung unter der Einwirkung von H₂S und Phosphorverbindungen als Sulfide, Phosphide und Phosphate im Innern der großen Kanäle der Partikel des erfindungsgemäßen Alumosilikats ab.

Auf der inneren Oberfläche der großen Poren der Partikel aufgebrachte Verbindungen von Elementen der Vl. Nebengruppe und der Vlll. Gruppe des PSE übertragen ihre Hydrierwirkung auch über die abgelagerten Schichten der anorganischen, während des Prozesses abgelagerten anorganischen Metallverbindungen weiterhin auf die hydrierend zersetzbaren Kohlenwasserstoff-Heteroatomverbindungen, so dass die Umwandlung in den durch ihre Größe gut zugänglichen Poren weiterhin noch länger ablaufen kann. Sobald die großen Poren mit Ablagerungen aufgefüllt sind, kann sich noch Schmutz im Lückenvolumen der Katalysatorschüttungen ablagern, bis die Durchgängigkeit durch das Katalysatorbett zu zu starker Differenzdruckerhöhung führt. Der enthaltene Phosphor wird in erster Linie vom Alkalialumosilikat gebunden; zusätzlich kann Phosphor auch von den bei der Herstellung aufgebrachten Hydriermetallen und von den während des Prozesses eingelagerten Metallen, wie Zink, Eisen, Nickel, Kupfer, gebunden werden.

Das in Form organischer Chlorverbindungen im Kohlenwasserstrom vorhanden Chlor wird nur in minimaler Menge in der 2. Reaktionszone aufgenommen. Damit wird dieses Element entweder erst am Hydrierkatalysator in der 3. Reaktionszone zersetzt, oder es passiert als Chlorwasserstoff die zweite Reaktionszone und die 3. Reaktionszone und wird nach dem Waschen überwiegend als HCl mit dem Waschwasser abgeschieden. Das Alkalialumosilikat wird demnach nicht in unvorteilhafter Weise mit großen Mengen an gebundenem Chlor belastet.

Das Alkalialumosilikat kann auch ohne Beladung mit Verbindungen von Elementen der Vl. Nebengruppe und VIII. Gruppe des PSE eingesetzt werden. Aus dem Kohlenwasserstoffstrom aus verbrauchtem Motorenöl werden dann noch großen Mengen an Phosphorverbindungen aufgenommen. Die in den großen Poren des Alkalialumosilikats abgelagerten Metalle, wie zum Beispiel Zink, Nickel und Vanadium als Sulfide und Phosphide, können auch katalytisch aktiv werden und die weitere Hydrierung von metallorganischen Verbindungen bewirken. Die Hydrierwirkung wird auch nicht durch die Gegenwart von aufgenommenem Arsen oder Blei vermindert oder vollkommen unterdrückt, sondern die auf der inneren Oberfläche beim Herstellungsprozess aufgebrachten Hydriermetalle übertragen ihre wasserstoffaktivierende Wirkung auch weiterhin auf die durchströmenden Moleküle.

Phosphor und Arsen werden offensichtlich bei den angewendeten Alkalialumosilikaten nicht an den Hydriermetallen, wie Nickel, fixiert, sondern in weit größerer Menge im alumosilikatischen Körper, wobei der Mechanismus der Aufnahme noch nicht geklärt werden konnte. Da Arsen von der Alkalialumosilkat-Schaumkeramik auch dann aufgenommen werden kann, wenn sie mit nur geringen Hydriermetallgehalten kombiniert ist, entsteht ein zusätzlicher Vorteil durch die Vermeidung hoher Schwermetallmengen im verwendeten Schutzkatalysator, besonders, wenn dieser als Arsenfänger eingesetzt wird.

Das erfindungsgemäße Material kann in Hydrierungsverfahren als auch zur Dekontamination von Ölen verwendet werden, die Nickel- und Vanadiumporphyrine enthalten. Dabei dient das Material als Schutzfilter in üblichen Festbettreaktoren (top layer). In solchen Fällen schützt es den Hauptkatalysator vor Verschmutzung und Vergiftung durch Arsen-, Nickel- und Vanadiumverbindungen.

Die Erfindung wird anhand der folgenden Beispiele weiter erläutert.

### Beispiel 1

Zur Herstellung der Proben aus Alkalialumosilikat wurde eine kommerziell verfügbare Schaumkeramik mit folgenden Eigenschaften durch Alkali- und Hydrierkomponentenbeladung modifiziert. Die Zusammensetzung ist in Gew.-%, bezogen auf wasserfreie Substanz in Tabelle 1 angegeben.

Eigenschaften der kommerziellen Schaumkeramik:

**(Tabelle 1: Probe 1, frisch)**

| | | |
|---|---|---|
| Form | Quader mit Kantenlängen 2 x 2 x 5 cm | |
| Zugängliches Porenvolumen | 0,9 cm³/g | |
| Porendurchmesserverteilung | 100 bis 300 µm | 20 % des Porenvolumens |
| | 300 bis 800 µm | 50 % des Porenvolumens |
| | 800 bis 2000 µm | 30 % des Porenvolumens |
| Teilchendichte | 0,75 g/cm³ | |
| Ladungsdichte | 440 kg/m³ | |
| Spezifische Oberfläche | 1 m²/g | |

Folgende Proben wurden auf der Grundlage der oben genannten Schaumkeramik hergestellt und in das Bett eines kommerziellen Demetallisierungskatalysators in einer Hydrieranlage eingebaut:
- A:: Unbehandelte, kommerzielle Schaumkeramik mit oben genannter Zusammensetzung
- B:: Kommerzielle alkaliarme Alumosilikat-Schaumkeramik mit 3 % NiO + 9 % MoO₃ beladen
- C:: Kommerzielle Schaumkeramik, mit 10 % Na₂O beladen
- D:: Kommerzielle Schaumkeramik, wie oben angegeben, mit 5 % Na₂O und 3 % NiO + 9 % MoO₃ beladen

### Herstellung von Probe B:

Die o. g. kommerzielle Schaumkeramik wurde mit einer Lösung von Nickelnitrat und Ammoniumdimolybdat mit einfacher Wasseraufnahme durch Sprühen der Lösung auf die Schaumkeramik imprägniert. Die Konzentration an Ni und Mo in der Lösung wurde so gewählt, dass durch eine definierte Menge an aufgesprühter Lösung die Zielkonzentration an Ni und Mo in der Schaumkeramik erreicht wurde. Die so behandelten Teilchen wurden fünf Stunden getrocknet und anschließen bei 500 °C drei Stunden in einem statischen Ofen mit Abzug der entstehenden Gase kalziniert.

### Herstellung der Probe C:

Die o. g. kommerzielle Schaumkeramik wurde mit einer Lösung von 10 Gew.-% Na₂CO₃, bezogen auf die Gesamtzusammensetzung, durch Aufsprühen der Lösung imprägniert, bei 100 bis 120 °C drei Stunden getrocknet und bei 800 °C kalziniert.

### Herstellung der Probe D:

Die o. g. kommerzielle Schaumkeramik wurde mit einer Lösung von 5 Gew.-% Na₂CO₃, bezogen auf die Gesamtzusammensetzung, durch Aufsprühen der Lösung imprägniert, bei 100 bis 120 °C drei Stunden getrocknet und bei 800 °C kalziniert. Anschließend wurde sie mit einer gemeinsamen Lösung von Nickelnitrat und Ammoniumdimolybdat durch Aufsprühen imprägniert, so dass die Zielkonzentration erreicht wurde.

Die Proben A und B sind nicht erfindungsgemäß; die Proben C und D sind zusätzlich mit Alkali beladen und erfindungsgemäß.

### Beispiel 2

### Die Proben A bis D wurden in das Bett eines kommerziellen

Demetallisierungskatalysators in einer technischen Anlage als Versuchsproben von jeweils einem Liter zur Hydrierung eines verbrauchten Motorenöls eingebaut.

Diese Proben wurden wie der gesamte Demetallisierungskatalysator während der gesamten Laufzeit des Katalysators von dem Kohlenwasserstofföl durchströmt und nach Beendigung des Betriebslaufs mit dem Demetallisierungskatalysator ausgebaut und mit Röntgenfluoreszenzanalyse untersucht.

Nach dem Ausbau wurden die Materialien nach Absieben des in den Lückenvolumina abgelagerten Staubs mittels Röntgenfluoreszenzanalyse auf anorganische Bestandteile untersucht. Die Analysenergebnisse sind in Tabelle 1 enthalten.

Es zeigt sich, dass durch die Alkalibeladung der Alumosilikat-Schaumkeramik die Wirksamkeit des Materials für die Aufnahme von Phosphor wesentlich gesteigert werden kann. Probe A enthält nur wenig native Alkalioxide. Deren Poren nehmen offensichtlich im Öl fein verteilte Zink-Phosphorverbindungen adsorptiv auf. Dagegen zeigen die zusätzlich mit Alkali beladene Alumosilikat-Schaumkeramik C und besonders die zusätzlich noch mit Hydriermetallverbindungen beladene Alkalialumosilikat-Schaumkeramik D eine noch wesentlich gesteigerte Aufnahme an Phosphor.

Die Erfinder haben festgestellt, dass das Schmieröladditiv Zinkdialkyldithiophosphat zersetzt wird, wobei Zink mit Phosphor eine anorganische Verbindung bildet, in der Zink und Phosphor im atomaren Verhältnis von 1: 1 stehen. Zink und Phosphor werden dann unlöslich im Öl und lagern sich als Zink-Phosphorverbindung im Katalysator ab. Zusätzlich entstehen bei der Zersetzung der organischen Zinkverbindung weitere Phosphorverbindungen, die kein Zink enthalten. Die letzteren werden nicht ausreichend von den bisher bekannten Demetallisierungskatalysatoren aufgenommen und wandern, nachdem die Hydrierkatalysatoren mit Phosphor gesättigt sind, mit dem Öl durch den Reaktor und erscheinen schließlich im Hydrierprodukt. Das Alkalialumosilikat kann jedoch diesen freien Phosphorverbindungen chemisch binden.

Zusätzlich fungiert das hydriermetallbeladene Alkalialumosilikat noch als Katalysator zur Zersetzung metallorganischer Verbindungen, z. B. des Bleis, Eisens und Kupfers. Nach der hydrierenden katalytischen Zersetzung verbleiben diese Metalle als Sulfide oder Phosphide und werden in den großen Poren der Alkalialumosilikat-Schaumkeramik fixiert und gesammelt. Weiterhin wird auch zusätzliches Zink als fixierte Verbindung abgeschieden, das vermutlich ebenfalls als metallorganische Verbindung vorlag.

Alle diese anorganischen Substanzen werden durch die Alkalialumosilikat-Materialien vor dem eigentlichen Hydrierkatalysator aufgesammelt und schützen letzteren vor vorzeitiger Vergiftung. Damit können die Qualitätskennziffern des Öls über eine viel längere Zeit erfüllt werden.

**Tabelle 1: Zusammensetzung des ausgebauten konventionellen Demetallisierungskatalysators und der eingebauten Proben gemäß Beispielen 1 und 2**

| | | | | | | | | | | |
|---|---|---|---|---|---|---|---|---|---|---|
| Zusammensetzung in Gew.-%, bezogen nur auf anorganische Bestandteile, als Oxide berechnet | | | | | | | | | | |

| | | | | | | | | | | |
|---|---|---|---|---|---|---|---|---|---|---|
| **Bestandteile** | **Demetallisierungskatalysator frisch** | **Demetallisierungskatalysator gebraucht** | **Probe A frisch** | **Probe A gebraucht** | **Probe B frisch** | **Probe B gebraucht** | **Probe C frisch** | **Probe C gebraucht** | **Probe D frisch** | **Probe D gebraucht** |
| SiO₂ | | | 66,3 | 55,4 | 58,4 | 46,0 | 59,2 | 37,7 | 55 | 25,5 |
| Al₂O₃ | | | 26,9 | 22,1 | 24,0 | 20,5 | 24,0 | 15,3 | 22 | 10,2 |
| Trägerkomponente | 82,0 | 70,8 | | | | | | | | |
| Na₂O | | 0,1 | 1,8 | 1,4 | 1,6 | 1,2 | 11,6 | 7,5 | 5 | 2,6 |
| K₂O | | | 4,4 | 3,6 | 3,0 | 2,3 | 3,9 | 2,4 | 3,0 | 1,3 |
| CaO | | 0,2 | 0,3 | 0,2 | 1,0 | 0,1 | 0,2 | 0,6 | 1,0 | 2,2 |
| NiO | | | | | 3,0 | 2,3 | | | 3,1 | 1,3 |
| MoO₃ | | | | | 8,0 | 6,3 | | | 9,1 | 4,0 |
| oxidische Hydrier-komponenten | 18,0 | 15,7 | | | | | | | | |
| FeO | | 0,1 | 0,2 | | | 0,3 | 0,5 | 0,7 | 0,5 | 0,8 |
| P₂O₅ | | 10,0 | | 15,0 | | 16,0 | 0,1 | 32,0 | | 44,8 |
| ZnO | | 2,1 | | 1,5 | | 2,4 | | 1,8 | | 3,2 |
| CuO | | | | | | 0,1 | | | | 0,1 |
| PbO | | | | | | 1,0 | | 1,3 | | 1,6 |
| Cl | | | | | | | | | | 1,0 |
| | | | | | | | | | | |
| Andere | | | | 0,5 | 1,0 | 1,5 | 0,2 | 0,6 | 0,3 | 0,5 |
| Summe | | | 100 | 99,8 | | 100,0 | 99,8 | 100 | | |
| Aufnahme von anorganischen Substanzen, berechnet als Oxide in g/100 g Kat. | | 14 | | 20 | | 25 | | 57 | | 125 |

### Beispiel 3

In diesem Beispiel wird die Aufnahme des besonders stark die Hydrierkatalysatoren vergiftend wirkenden, Phosphor ähnlichen Elements Arsen mittels der erfindungsgemäßen, hydriermetallbeladenen Alkalialumosilikat-Schaumkeramik näher beschrieben.

Die Ausbauproben aus Beispiel 2 wurden vom Staub durch Absieben befreit. Die Arsengehalte des ausgebauten Demetallisierungskatalysators, des im Lückenvolumen des Katalysatorbetts abgelagerten Staubs und der erfindungsgemäßen Alkalialumosilikate C und D wurden exakt in mg As/ kg (ppm), bezogen auf die Ausbaumasse, bestimmt. Dabei wurden die in Tabelle 2 erhaltenen Werte erhalten.

Das Ergebnis zeigt, daß die erfindungsgemäß angewendete, hydriermetallbeladene Alkalialumosilikat-Schaumkeramik D in der Lage ist, fünfmal mehr Arsen aufzunehmen als ein konventioneller Demetallisierungskatalysator. Damit ist bei der erfindungsgemäßen Verwendung der hydriermetallbeladenen Alkalialumosilikat-Schaumkeramik auch ein viel besserer Schutz der Hydrierkatalysatoren vor Arsenvergiftung zu erwarten als durch den Einsatz der üblichen Demetallisierungskatalysatoren.

**Tabelle 2: Gehalte an Arsen in mg/kg Original-Ausbaumaterial nach dem Einsatz gemäß Beispiel 2**

| | |
|---|---|
| Konventioneller | 115 |
| Demetallisierungskatalysator | |
| Schaumkeramik Probe A | 5 |
| Schaumkeramik Probe C | 97 |
| Schaumkeramik Probe D | 581 |
| Staub | <17 |

## Patentansprüche

1. Katalytisch aktives Material mit Adsorbenseigenschaften für die Entfernung von Nichtkohlenwasserstoffverbindungen in Festbett-Hydrierprozessen, bestehend aus keramischem, supermakroporösen Alkalialumosilikat,

2. Katalytisch aktives Material mit Adsorbenseigenschaften nach Anspruch 1, das zusätzlich mit einer oder mehreren Hydrierkomponenten, die aus Verbindungen von Elementen der VI. Nebengruppe und/oder der VIII. Nebengruppe des Periodensystems ausgewählt wird, beladen ist.

3. Katalytisch aktives Material nach Anspruch 2, mit einem Gehalt von bis zu 10 Gew.-% eines Elements der Vl. Nebengruppe des PSE und/oder bis 10 Gew.% eines Elementes der VIII. Nebengruppe des PSE, jeweils berechnet als Oxid und bezogen auf das Gesamtgewicht des Materials.

4. Katalytisch aktives Material nach Anspruch 3, mit einem Gehalt von bis zu 10 Gew.-% des Elementes der Vl. Nebengruppe, ausgewählt aus Nickel und Kobalt, und/oder bis zu 10 Gew.-% des Elementes der VIII. Nebengruppe, ausgewählt aus Molybdän und/oder Wolfram, jeweils berechnet als Oxid und bezogen auf das Gesamtgewicht des Materials.

5. Katalytisch aktives Material nach einem der Ansprüche 1 bis 4, mit einem Porenvolumen von 0,6 bis 1,5 cm³/g, bevorzugt 0,8 bis 1,2 cm³/g auf, wobei die Poren einen Durchmesser von 0,01 bis 3,0 mm, bevorzugt 0,05 bis 2,0 mm besitzen:

6. Katalytisch aktives Material nach einem der Ansprüche 1 bis 5, mit einer spezifischen Oberfläche von unter 50, bevorzugt unter 25 und besonders bevorzugt unter 10 m²/g.

7. Verfahren zur Herstellung des katalytischen aktiven Materials nach einem der Ansprüche 1 bis 6, **dadurch gekennzeichnet, dass** man alumosilikatische, keramische Partikel mit durchgehenden Poren von 0,01 bis 3,0 mm Durchmesser mit Verbindungen von Elementen der I. Hauptgruppe und gegebenenfalls weiterhin mit ein oder mehreren Verbindungen von Elementen der Vl. Nebengruppe und/oder der Vlll. Gruppe des Periodensystems belädt und/oder in diese keramischen Partikel einarbeitet und die so behandelten Partikel thermisch bei Temperaturen von 300 bis 800 °C nachbehandelt.

8. Verfahren zur Herstellung des katalytischen aktiven Materials nach Anspruch 7, **dadurch gekennzeichnet, dass** man die alumosilikatischen, keramischen Partikel mit einer Alkalimetallverbindung imprägniert, thermisch bei Temperaturen von 300 bis 800 °C nachbehandelt und das erhaltene Alkalialumosilikat mit Verbindungen von Elementen der Vl. Nebengruppe und/oder der Vlll. Nebengruppe des Periodensystems der Elemente imprägniert und erneut thermisch bei 350 bis 600 °C nachbehandelt.

9. Verfahren nach Anspruch 7 oder 8, **dadurch gekennzeichnet, dass** das Masseverhältnis von Al₂O₃ zu SiO₂ im Alkalialumosilikat 5 : 95 bis 20 : 80 beträgt.

10. Verfahren nach Anspruch 7, 8 oder 9, **dadurch gekennzeichnet, dass** man als Alkalimetallverbindung Verbindungen auswählt, die nach der Kalzination Li₂O, Na₂O, K₂O, Rb₂O und/oder C_{S2}O, ergeben und mit dem keramischen Alumosilikat zu Alkalialumosilikat reagieren.

11. Verfahren nach Anspruch 10, **dadurch gekennzeichnet, dass** man die Alkalimetallverbindung in einer Menge verwendet, dass das Alkalialumosilikat 0,5 bis 30 Gew.-%, bevorzugt 1 bis 20 Gew.-% und besonders bevorzugt 5 bis 20 Gew.-%.-Na₂O und/oder K₂O enthält.

12. Verfahren nach einem der Ansprüche 7 bis 11, **dadurch gekennzeichnet, dass** man die Verbindungen von Elementen, ausgewählt aus der Vl. Nebengruppe und der der VIII. Nebengruppe, in einer Menge verwendet, dass das Alkalialumosilikat bis 20 Gew.- % , besonders bis zu 10 Gew.-% des Elementes, berechnet als Oxid, enthält.
